# EUROPEAN PATENT SPECIFICATION

(11) **EP 2 354 757 B1**
(45) Date of publication and mention of the grant of the patent: **24.07.2013**
(21) Application number: 11153230.5
(22) Date of filing: 03.02.2011
(51) Int. Cl.: F42C 19/08, F42C 19/10, F42B 5/36, F42B 5/34, F42B 1/024, B29C 49/78

(54) **PRIMER WITH REDUCED CHARGE**
PRIMER MIT REDUZIERTEM LADUNG
AMORCE A CHARGE REDUITE

(30) Priority: 10.02.2010 IT MI20100197
(43) Date of publication of application: 10.08.2011
(73) Proprietor: Fiocchi Munizioni S.p.A., 23900 Lecco (IT)
(72) Inventor: Galluzzi, Carlo, 23900, LECCO (IT)
(74) Representative: Locatelli, Massimo

(56) References cited:
- DE-A1- 3 433 752
- US-A- 3 306 203
- US-A- 3 771 454
- US-A1- 2007 234 923

## Description

The present invention refers to an innovative primer with a reduced charge.

With new types of mixture, it is necessary to adjust some characteristics given by the amount of the mixture. This can, however, lead to a degradation of the characteristics of the primer or to unacceptable size variations thereof.

In particular, over the years the market has increasingly become more sensitive towards environmental problems and has thus required various kinds of ammunition to be manufactured with components free of lead or compounds thereof, and free of other heavy metals, so as to reduce pollution and the potential absorption or inhaling, by the user/shooter, of the gasses emitted during the explosion.

All the biggest manufacturers of primers have therefore researched, over the last few years, formulas free of lead compounds and other heavy metals.

The final purpose of primer manufacturers is of course that of being able to produce a type of primer that can at least reach the sensitivity, incendivity and power characteristics of primers with conventional mixtures, that is to say, those using lead styphnate and similar as their basic explosive.

The most promising new mixtures are the mixtures using diazodinitrophenol as their basic primary explosive. Unfortunately, over time operating anomalies have been noted in primers with these mixtures.

One of the chemical characteristics of diazodinitrophenol is, indeed, that of being a very powerful explosive, with a "brisance" that is much greater than lead styphnate. In the proposed mixtures it has been attempted to reduce the percentage of diazodinitrophenol in the mixture to the functional minimum so as to ensure the even ignition of the primer, but such a solution has not given totally positive results since even this small percentage of diazodinitrophenol is still too high and produces a particularly violent priming ("brisance").

As a consequence of the violence of the primers with diazodinitrophenol currently used, faults have occurred when used in a firearm, such as a backward movement of the cap, perforation of the cap, hammering of the breechblocks of the firearms or of the action body with the formation of a sort of annular ridge around the exit hole of the firing pin of the weapon.

These drawbacks, in addition to damaging the firearms, can also potentially lead to accidents during their normal use, especially in semi-automatic firearms.

It has been proposed to reduce the weight/volume of the charge, but it is not possible to go below a certain weight/volume of mixture without causing further serious problems of irregularities in the operation of the primer, especially as far as the sensitivity and incendivity are concerned.

The primer, both of the Boxer type for cartridges for firearms with a rifled barrel and of the uncovered type for cartridges for smooth-barrel firearms, is a delicately balanced system in terms of its physical dimensions, internal volumes, temperature of the explosion gasses, incendivity, amount of gas, sensitivity. Changing the type of explosive and the formula of the priming mixtures and the physical dimensions of the primer, substantially changes the essential characteristics of the system. This makes it very difficult to act upon the physical characteristics of the primer.

The simple lowering of the mixture thickness under the anvil, for example, is not possible to propose since below a certain thickness the mixture breaks, causing irregularities or failed ignition.

It has been proposed to make new types of primers with physical dimensions that are different from the international standard ones, so as to reduce the amount of mixture in the primer, but such a solution has highlighted the need of investments and both technical and marketing difficulties, which have made this approach non advisable.

US 3,771,454 discloses a percussion primer in which the pellet loading is made of superimposed punched discs of various explosive, combustible and igniter plastic materials, packed at the bottom of the cup.

The general purpose of the present invention is that of making primers with a reduction of the volume of the explosive mixture and that make it possible to obtain satisfactory characteristics when shooting.

In view of such a purpose it has been conceived to make, according to the invention, a primer for firearms, comprising a cap containing an explosive mixture, characterised in that in proximity of the peripheral edge of the bottom of the cap there is an element for the radial reduction of the inner space of the cap intended to be filled with the mixture, so as to reduce by a selected amount the volume of the space available for the mixture.

In order to clarify the explanation of the innovative principles of the present invention and its advantages with respect to the prior art we shall describe, in the rest of the description, with the help of the attached drawings, a possible embodiment applying such principles. In the drawings:
- figure 1 represents a schematic section view of a first embodiment of a primer according to the invention;
- figure 2 represents a schematic view of another embodiment of a primer according to the invention;
- figures 3 to 6 schematically represent details of the primer at the bottom of the cap containing the explosive mixture according to further variant embodiments of the invention.

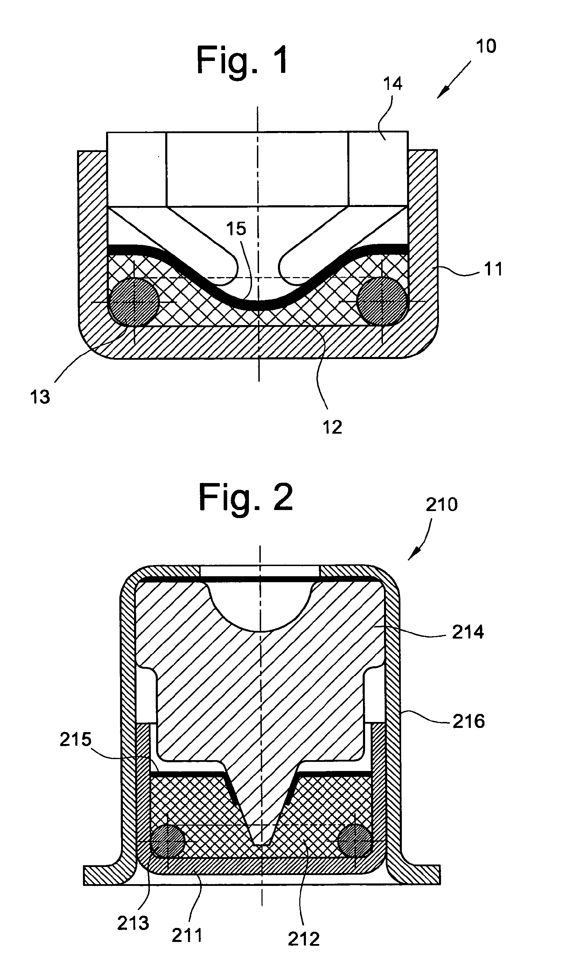

With reference to the figures, figure 1 shows a primer of the "Boxer" type, applying the principles of the invention, wholly indicated with reference numeral 10. It comprises a cap 11 containing, in the bottom area, the explosive mixture 12. The mixture is advantageously of the type free of heavy metals and, in particular, it is a mixture of the type comprising diazodinitrophenol. Above the mixture there is the anvil 14. Between the anvil and the mixture there can also be a known protective layer 15.

According to the innovative principles of the present invention, in proximity of the peripheral edge of the bottom of the cap there is an element 13 of radial reduction of the inner space of the cap with respect to the space defined by the diameter of the cap in its bottom area intended to be filled with the mixture, that is to say the space that would be defined by the inner diameter of the bottom of the cap made in a conventional manner, i.e. without such an element 13. The volume of such an element 13 of radial reduction of the inner space is selected to reduce the volume of the mixture by a desired value. The exact reduction percentage to be applied depends upon the chemical formula selected for the mixture and upon the results that are desired to be obtained.

It has been found that the reduction of volume can be, for example, from about 15% to even 40% less in volume with respect to the same primer in a conventional form, with excellent results in the characteristics of the primer.

Apart from the presence of such an element 13, the primer can be substantially the same as the corresponding standard primer.

Thanks to the presence of such an element 13 of radial reduction of the inner space, the reduction of the volume of mixture does not lead to any reduction of the thickness of mixture in the central area. Moreover, the element 13 is positioned so that it cannot cause troubles in the coupling with the anvil.

In the preferred embodiment illustrated in figure 1, the element 13 of radial reduction of the inner space is made up of an annular element arranged along the peripheral edge of the bottom of the cap 11. Such an annular element can be made of various materials (for example, plastic, metal, cardboard or other suitable materials). Apart from the insertion of the ring 13, the primer can substantially be the same as the corresponding standard primer.

Figure 2 shows another type of primer made according to the invention, of the type that can advantageously be used in cartridges for firearms with a smooth-barrel.

Such a primer, generally indicated with reference numeral 210, also comprises a cap 211 containing the explosive mixture 212. The mixture is advantageously of the type free of heavy metals and comprising diazodinitrophenol.

Above the mixture there is the suitably shaped anvil 214, and a possible protective layer 215. In a known way, all of this is enclosed by an inverted cup 216 which couples with the cap 211.

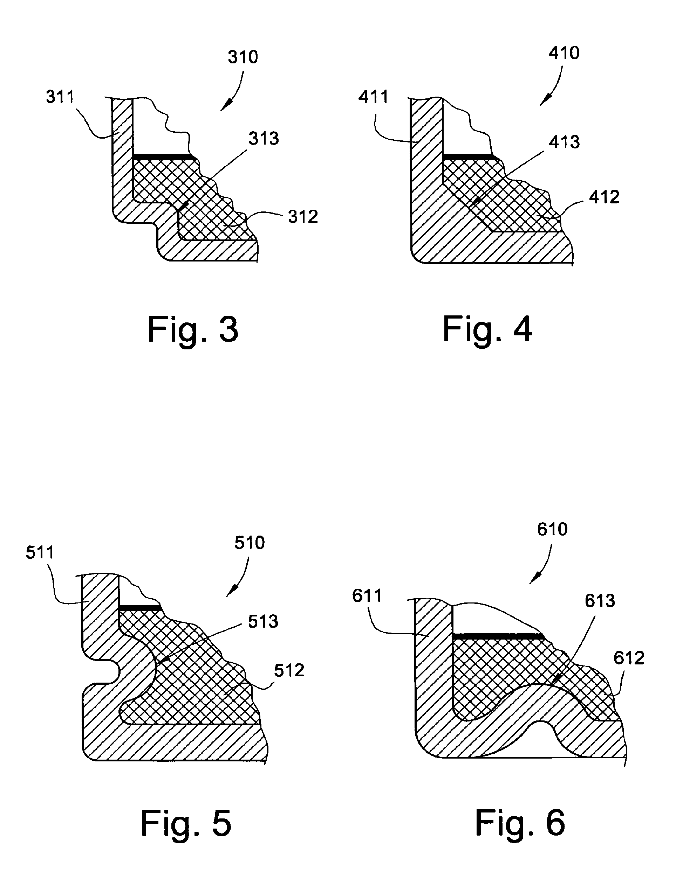

Similarly to the previous embodiment, there is an element 213 of radial reduction of the inner space of the cap, consisting of an annular element arranged along the peripheral edge of the bottom of the cap. Such a ring can be made of various materials (for example, plastic, metal, cardboard or other suitable materials). All the parts of the primer 210 can be kept the same as the standard ones, with all the aforementioned advantages of the previous embodiment. Figures 3, 4, 5 and 6 illustrate some variant embodiments of the present invention, as an example, with partial schematic views of the area of the primer (respectively 310, 410, 510, 610) at the peripheral edge of the bottom of the cap 311, 411, 511, 611 that contains the explosive mixture 312, 412, 512, 612.

In such constructive variants, the element (respectively 313, 413, 513, 613) of radial reduction of the inner space of the respective cap 311, 411, 511, 611 is made as a single piece with the wall of the cap in proximity of the peripheral edge of the bottom of the cap itself. In particular, such an element for the radial reduction of the inner space can be made with a deformation of the wall of the cap towards the inside of the bottom area intended to be filled with the mixture (figures 3, 5 and 6, respectively with a deformation at the peripheral edge, at the side wall or at the bottom wall), or shaping the inner surface of the cap with an inclined joining section between the bottom of the cap and its side wall (as illustrated in figure 4).

Even in the embodiments of figures 3-6, the element for the radial reduction of the inner space, made as a single piece with the wall of the cap, can advantageously have the shape of a ring that follows the perimeter of the cap.

At this point it should be clear how the set purposes have been achieved.

It has surprisingly been found that primers (both of the Boxer type, and of the uncovered type) made according to the invention, even having about 30% (and even up to 40%) less of the volume of mixture, have kept the same sensitivity, incendivity and processing characteristics as conventional primers with diazodinitrophenol with normal weights/volumes of mixture.

The reduction of weight/volume has led to a considerable reduction of the "brisance" of the primer, thus eliminating the problems in firearms.

This would not be possible with a simple reduction of weight/volume of the mixture or with other interventions, if not without jeopardising the general characteristics of the product.

Even if further modifications to the shape of components of the primer can be conceived, it has been found more advantageous to use standard components.

In particular, with the introduction of an annular element like in the embodiments of figure 1 and 2 it is possible, with an appropriate calculation of the dimensions of such a supplementary element, to reduce by a certain amount the inner volume of the cap keeping all the other dimensions of the primer unvaried.

It should be noted that the outer side contact surface of the cap indeed remains substantially unvaried with respect to a standard primer and, therefore, possible weaknesses are not introduced in the seal that could cause hot gas to escape at the moment of shooting.

Of course, the description above of an embodiment applying the innovative principles of the present invention is given as an example of such innovative principles and must not therefore be taken to limit the scope of protection claimed hereby. For example, any other type of primer, in addition to those shown, can benefit the invention.

## Claims

1. Primer for firearms, comprising a cap (11, 211, 311, 411, 511, 611) containing an explosive mixture (12, 212, 312, 412, 512, 612), **characterised in that** in proximity of the peripheral edge of the bottom of the cap an element is provided (13, 213, 313, 413, 513, 613) for radial reduction of the inner space of the cap intended to be filled with the mixture, to reduce the volume of the space available for the mixture by a selected amount.

2. Primer for firearms according to claim 1, **characterised in that** the element for the radial reduction of the inner space is made up of a separate annular element (13, 213) arranged at the bottom of the cap (11, 211).

3. Primer for firearms according to claim 2, **characterised in that** the annular element (13, 213) is arranged at the peripheral edge of the bottom of the cap (11, 211).

4. Primer for firearms according to claim 2, **characterised in that** the annular element (13, 213) is made of material selected among plastic, metal, cardboard.

5. Primer for firearms according to claim 1, **characterised in that** the element (313, 413, 513, 613) for the radial reduction of the inner space is made in a single piece with the wall of the cap (311, 411, 511, 611) in proximity of the peripheral edge of the bottom of the cap itself.

6. Primer for firearms according to claim 5, **characterised in that** the element (313, 513, 613) for the radial reduction of the inner space is obtained by deforming the wall of the cap (311, 511, 611) towards the inside of the bottom area intended to be filled with the mixture.

7. Primer for firearms according to claim 5, **characterised in that** the element (413) for the radial reduction of the inner space is obtained by means of an inclined section of the inner surface of the cap (411), which joins the bottom of the cap with the side wall thereof.

8. Primer for firearms according to claim 1, **characterised in that** the reduction of volume is comprised between 15% and 40%.

9. Primer for firearms according to claim 1, **characterised in that** the mixture is free of heavy metals.

10. Primer for firearms according to claim 1, **characterised in that** the mixture contains diazodinitrophenol.

## Patentansprüche

1. Primer für Feuerwaffen, der eine Kappe (11, 211, 311, 411, 511, 611) umfasst, die ein explosives Gemisch (12, 212, 312, 412, 512, 612) enthält, **dadurch gekennzeichnet, dass** in der Nähe des Umfangsrands des Bodens der Kappe ein Element (13, 213, 313, 413, 513, 613) für die radiale Verringerung des Innenraums der zum Befüllen mit dem Gemisch vorgesehenen Kappe vorgesehen ist, um das Volumen des für das Gemisch verfügbaren Raums um ein gewähltes Maß zu verringern.

2. Primer für Feuerwaffen nach Anspruch 1, **dadurch gekennzeichnet, dass** das Element für die radiale Verringerung des Innenraums aus einem separaten ringförmigen Element (13, 213) besteht, das am Boden der Kappe (11, 211) angeordnet ist.

3. Primer für Feuerwaffen nach Anspruch 2, **dadurch gekennzeichnet, dass** das ringförmige Element (13, 213) am Umfangsrand des Bodens der Kappe (11, 211) angeordnet ist.

4. Primer für Feuerwaffen nach Anspruch 2, **dadurch gekennzeichnet, dass** das ringförmige Element (13, 213) aus einem Material besteht, das aus Kunststoff, Metall und Karton ausgewählt ist.

5. Primer für Feuerwaffen nach Anspruch 1, **dadurch gekennzeichnet, dass** das Element (313, 413, 513, 613) für die radiale Verringerung des Innenraums einstückig mit der Wand der Kappe (311, 411, 511, 611) in der Nähe des Umfangsrands des Bodens der Kappe ausgeführt ist.

6. Primer für Feuerwaffen nach Anspruch 5, **dadurch gekennzeichnet, dass** das Element (313, 513, 613) für die radiale Verringerung des Innenraums durch Verformen der Wand der Kappe (311, 511, 611) zum Innern des Bodenbereichs hin erhalten ist, der mit dem Gemisch gefüllt werden soll.

7. Primer für Feuerwaffen nach Anspruch 5, **dadurch gekennzeichnet, dass** das Element (413) für die radiale Verringerung des Innenraums durch einen schrägen Abschnitt der Innenfläche der Kappe (411) erhalten ist, der den Boden der Kappe mit ihrer Seitenwand verbindet.

8. Primer für Feuerwaffen nach Anspruch 1, **dadurch gekennzeichnet, dass** die Verringerung des Volumens zwischen 15% und 40% beträgt.

9. Primer für Feuerwaffen nach Anspruch 1, **dadurch gekennzeichnet, dass** das Gemisch frei von Schwermetallen ist.

10. Primer für Feuerwaffen nach Anspruch 1, **dadurch gekennzeichnet, dass** das Gemisch Diazodinitrophenol enthält.

## Revendications

1. Amorce pour armes à feu, comprenant un culot (11, 211, 311, 411, 511, 611) contenant un mélange explosif (12, 212, 312, 412, 512, 612), **caractérisée en ce qu'**un élément (13, 213, 313, 413, 513, 613) pour la réduction radiale de l'espace intérieur du culot destiné à être rempli avec le mélange est prédisposé à proximité du bord périphérique du fond du culot, pour réduire le volume de l'espace disponible pour le mélange d'une quantité sélectionnée.

2. Amorce pour armes à feu selon la revendication 1, **caractérisée en ce que** l'élément pour la réduction radiale de l'espace intérieur est constitué par un élément annulaire séparé (13, 213) disposé au fond du culot (11, 211).

3. Amorce pour armes à feu selon la revendication 2, **caractérisée en ce que** l'élément annulaire (13, 213) est disposé au niveau du bord périphérique du fond du culot (11, 211).

4. Amorce pour armes à feu selon la revendication 2, **caractérisée en ce que** l'élément annulaire (13, 213) est constitué d'un matériau sélectionné parmi le plastique, le métal et le carton.

5. Amorce pour armes à feu selon la revendication 1, **caractérisée en ce que** l'élément (313, 413, 513, 613) pour la réduction radiale de l'espace intérieur est réalisé d'une seule pièce avec la paroi du culot (311, 411, 511, 611) à proximité du bord périphérique du fond du culot lui-même.

6. Amorce pour armes à feu selon la revendication 5, **caractérisée en ce que** l'élément (313, 513, 613) pour la réduction radiale de l'espace intérieur est obtenu en déformant la paroi du culot (311, 511, 611) vers l'intérieur de la zone de fond destinée à être remplie avec le mélange.

7. Amorce pour armes à feu selon la revendication 5, **caractérisée en ce que** l'élément (413) pour la réduction radiale de l'espace intérieur est obtenu au moyen d'une section inclinée de la surface intérieure du culot (411), qui unit le fond du culot à la paroi latérale de celui-ci.

8. Amorce pour armes à feu selon la revendication 1, **caractérisée en ce que** la réduction de volume est comprise entre 15% et 40%.

9. Amorce pour armes à feu selon la revendication 1, **caractérisée en ce que** le mélange est exempt de métaux lourds.

10. Amorce pour armes à feu selon la revendication 1, **caractérisée en ce que** le mélange contient du diazodinitrophénol.
